(19) Europäisches Patentamt
European Patent Office
Office européen des brevets

(11) Numéro de publication : 0 307 450 B1

(12) FASCICULE DE BREVET EUROPEEN

(45) Date de publication du fascicule du brevet : 20.02.91 Bulletin 91/08

(51) Int. Cl.[5] : C02F 1/56

(21) Numéro de dépôt : 88903263.7

(22) Date de dépôt : 24.03.88

(86) Numéro de dépôt international : PCT/FR88/00154

(87) Numéro de publication internationale : WO 88/07499 06.10.88 Gazette 88/22

# (54) TRAITEMENT DES REJETS D'EAUX DE BOURBIERS CONTENANT DES LIGNO-SULFONATES.

(30) Priorité : 27.03.87 FR 8704271

(43) Date de publication de la demande : 22.03.89 Bulletin 89/12

(45) Mention de la délivrance du brevet : 20.02.91 Bulletin 91/08

(84) Etats contractants désignés : FR GB IT NL

(56) Documents cités :
FR-A- 2 205 485
US-A- 4 459 228
Patent Abstracts of Japan, volume 7, No 135 (C-170) (1280), 11 June 1983
Patent Abstracts of Japan, volume 8, No 114 (C-225) (1551), 26 May 1984
Chemical Abstracts, volume 85, No 24, 13 December 1976 (Columbus, Ohio, US) see page 287, Ref. No 181960m
La Technique Moderne, volume 61, No8/9 August-September 1969. " L'essorage des boues par centrifugation", page 321, see right hand column, point 1

(73) Titulaire : SOCIETE NATIONALE ELF AQUITAINE (PRODUCTION)
Tour Elf, 2, Place de la Coupole, La Défense 6
F-92400 Courbevoie (FR)

(72) Inventeur : GUILLERME, Michel
25, rue de L'Ouzom
F-64121 Serres-Castet (FR)
Inventeur : MOUNETOU, Pierre
92, avenue Henri IV
F-64110 Jurançon (FR)
Inventeur : GASTOU, Bernard
5, rue du Docteur Boutilhe
F-64000 Pau (FR)

(74) Mandataire : Rames, Michel
Société Nationale Elf Aquitaine Departement
Propriété Industrielle Tour Elf
F-92078 Paris la Défense - Cedex 45 (FR)

EP 0 307 450 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un procédé de traitement des rejets d'eaux usées et un dispositif de mise en oeuvre dudit procédé. Elle s'applique plus spécialement au traitement des eaux des bourbiers de forages pour hydrocarbures.

Les boues de forage contiennent à la fois des matières minérales, notamment argiles, carbonates de calcium, magnésium et métaux alcalino-terreux et sulfates (gypse), et des matières organiques solubles ou dispersées, en particulier des ligno-sulfonates, des bio-polymères et de la carboxy-méthyl-cellulose. Avec 30 à 230 kg de matière solide par mètre cube, la densité de la boue a une valeur comprise entre 1,03 et 1,14.

Les effluents de forage sont essentiellement composés de boue de forage diluée par les eaux de lavage, ils ne peuvent être rejetés dans une rivière sans traitement.

Les paramètres essentiels qui régissent l'autorisation de rejet sont la couleur, l'odeur, la demande chimique en oxygène (DCO), la demande biologique en oxygène (DBO), les matières en suspension (MES), les sels dissous, la teneur en hydrocarbures, enfin la toxicité.

Les ligno-sulfonates sont employés pour le traitement des boues à la fois comme dispersant et inhibiteur de gonflement des argiles, réducteur de filtrat et améliorateurs de cake, résistant aux fortes concentrations de calcium et de NaCl et aux températures élevées, ils agissent sur la couleur qui devient de marron à noir et sur la DCO qui augmente de façon importante.

Les divers traitements qui ont été proposés, d'une façon générale, comprennent une acidification destinée à faire précipiter les matières minérales et un ajout de produits spécifiques aptes à faire se séparer les matières organiques.

Pour les effluents d'usines pour pâte à papier, le brevet américain 4,459,228 HAARS préconise une acidification par l'acide chlorhydrique, bien adaptée au traitement d'effluents à faible contenu minéral et provoquant un abaissement du pH au-dessous de 6 favorisant l'étape suivante qui consiste en une adjonction de polycations, notamment de polyimines, particulièrement aptes à éliminer les ligno-sulfonates en milieu chlorhydrique.

Les boues de forage selon le brevet français n° 2.205.485 ERAP sont avantageusement acidifiées à l'aide d'acide sulfurique, ce qui entraîne la précipitation en sulfates de leur importante charge de matières minérales. L'adjonction ultérieure de composés alcalins ou alcalino-terreux est proposée pour éliminer les ligno-sulfonates : cette dernière étape n'est pas, dans tous les cas, réalisée de façon parfaite.

Un autre traitement, actuellement pratiqué, basé sur une coagulation floculation anionique en une seule opération, ne permet pas d'éliminer efficacement les ligno-sulfonates.

Le nouveau procédé évite cet inconvénient en effectuant successivement et séparément la coagulation et la floculation, à l'aide d'un produit spécifique, ce qui permet le contrôle et la mise au point de chaque étape.

Un procédé selon l'invention pour le traitement des effluents aqueux à teneur élevée en matières minérales et contenant des ligno-sulfonates, tels que des boues de forage, comprend les étapes d'injecter de l'acide sulfurique pour provoquer une coagulation, d'ajouter ensuite un poly-électrolyte cationique entraînant une floculation et enfin de mettre en oeuvre une séparation mécanique des phases liquides et solides.

Un tel procédé est caractérisé en ce que le poly-électrolyte cationique est un polymère hydrosoluble comprenant au moins 40% de motifs récurrents portant chacun au moins un groupement ammonium quaternaire. La proportion minimale de 40% est généralement considérée en poids.

Suivant un mode préférentiel de réalisation, le motif récurrent portant au moins un groupement ammonium quaternaire est un motif dérivant d'un acrylate, et de formule :

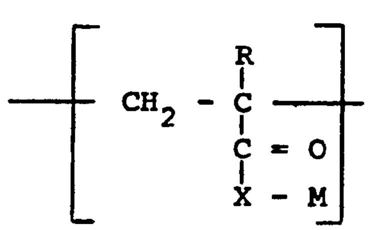

dans lequel X est O ou NH, R est H ou $CH_3$ et M est un radical ammonium quaternaire :

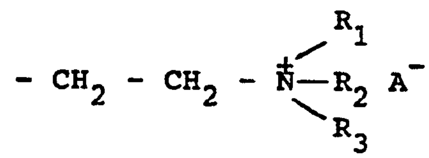

où $A^-$ est un anion compatible avec $\overset{+}{N}$, et où $R_1$ $R_2$ $R_3$ sont des restes hydrocarbonés en $C_1$ à $C_4$.

Dans un tel procédé, l'anion $A^-$ compatible avec $\overset{+}{N}$ est choisi parmi les suivants : $Cl^-$, $Br^-$, $CH_3SO_4^-$.

De façon préférentielle, les restes hydrocarbonés en $C_1$ à $C_4$ dénommés $R_1$ $R_2$ $R_3$ sont choisis parmi des alkyles en $C_1$ à $C_4$.

Dans un tel procédé, outre les motifs récurrents portant au moins un groupement ammonium quaternaire, le polymère hydrosoluble comprend, en complément, des motifs acrylamides :

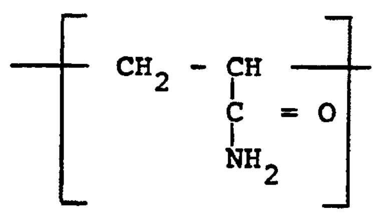

De la même façon, il est avantageux de choisir comme radical M un reste d'ammonium quaternaire de formule :

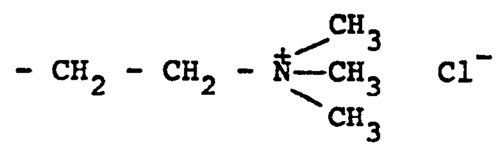

Dans les diverses modalités du procédé, il est souhaitable qu'après avoir injecté l'acide sulfurique et provoqué le meilleur mélange de cet acide sulfurique avec l'effluent, on contrôle le pH moyen dudit effluent et on additionne ce qui est nécessaire pour maintenir ce pH entre 5 et 6.

De même, après avoir injecté un poly-électrolyte cationique et provoqué le meilleur mélange, il est utile de maintenir le contact entre ledit poly-électrolyte et l'effluent pendant un temps suffisamment long pour que la floculation soit effective avant d'effectuer la séparation mécanique.

Un dispositif pour le traitement selon l'invention des effluents de forage contenant des ligno-sulfonates, comporte successivement, sur une ligne de traitement, des moyens :

- d'injection d'acide sulfurique
- de mélange de cet acide avec l'effluent,
- de contrôle du pH et de son maintien tel que pH inférieur à 6,
- d'injection d'un poly-électrolyte cationique,
- de mélange dudit poly-électrolyte avec l'effluent,
- du maintien en présence du poly-électrolyte avec l'effluent par l'utilisation d'une boucle de floculation de longueur suffisante déterminée en fonction du débit, et enfin,
- de séparation des phases solide et liquide.

Parmi les différents moyens de mélange du poly-électrolyte et de l'effluent, une rampe hélicoïdale fixe, coaxiale de la ligne de traitement a été utilisée avec succès.

Dans les dispositifs considérés comme les plus satisfaisants, la boucle de floculation utilisée a une longueur d'au moins vingt cinq mètres.

Suivant un mode préférentiel de réalisation, les moyens de séparation des phases solide et liquide sont constitués par une centrifugeuse.

L'invention sera mieux comprise dans la description suivante, donnée à titre non limitatif, d'un dispositif, destiné à la mise en oeuvre du procédé proposé, illustré à l'aide des figures jointes.

- Figure 1 : Schéma de l'installation.
- Figure 2 : Dispositif égouttoir-compacteur.

Sur la figure I, on trouve, représenté schématiquement, une ligne de traitement du bassin à boue (1) au rejet dans un drainage extérieur (2) tel qu'une rivière pour l'eau et une décharge pour la phase solide pelletable (11).

Sur cette ligne, on distingue successivement :

– un conduit (3) d'arrivée d'eau douce pour dilution éventuelle,

– un dispositif (4) d'injection d'acide sulfurique dilué suivant les besoins,

– un mélangeur statique (5), dispositif hélicoïdal, coaxial du conduit, provoquant augmentation locale de vitesse et turbulence favorable au mélange

– un dispositif (6) de contrôle du PH,

– un dispositif (7) d'injection de poly-électrolyte,

– un dispositif mélangeur (8),

– un dispositif (9) dit boucle de floculation, constitué par un tube de longueur importante, au moins 25 mètres mis en forme de serpentin pour en réduire l'encombrement et favoriser le contact,

– enfin un dispositif (10) de séparation solide liquide avec les sorties séparées pour l'évacuation de l'eau (2) et de la phase solide ou plutôt boueuse (11). Le dispositif (10) peut être constitué par une centrifugeuse. Il peut aussi être constitué par un égouttoir-compacteur tel qu'il est montré sur la figure II.

La figure II représente un égouttoir-compacteur comprenant deux parties : une grille (12) inclinée d'au moins 45° sur la verticale sur laquelle l'effluent floculé glisse se séparant en eau libre qui passe à travers et va au rejet (2) et en éléments floculés (13), et une vis compacteuse (14) vers laquelle glissent par gravité lesdits éléments floculés (13) et qui délivre à son extrémité (15) un effluent pelletable (11) alors que de l'eau traverse une grille de fond (16) pour être elle aussi orientée vers le rejet (2).

Exemple de fonctionnement du dispositif

La boue traitée est bentonitique avec ligno-sulfonates avec une densité d = 1,04 à 1,05 et un débit de traitement de 3 $m^3$/heure.

Le traitement d'une telle boue avec 0,75 kg de poly-électrolyte par $m^3$ se traduit par les changements de caractéristiques indiqués ci-après :

– le DCO passe de 3.240 à 1.000-1.300,

– le MES en mgr/litre de 40.000 à 200-700,

– les ligno-sulfonates en g/litre de 2,80 à 1-1,4,

– le pH reste stable entre 5 et 6,

– les chlorures restent stables à 1,07 alors qu'ils croissent avec le traitement anionique,

– la couleur brun-noirâtre devient jaune paille clair.

Ajoutons que l'acidification par $SO_4H_2$ est moins onéreuse que par HCl et élimine, une fraction appréciable d'ions Ca++, ce qui rend l'eau résiduelle plus utilisable pour la confection de boue fraîche.

## Revendications

1. Procédé de traitement des effluents aqueux à teneur élevée en matières minérales et contenant des ligno-sulfonates, tels que des boues de forage, dans lequel on injecte de l'acide sulfurique pour provoquer une coagulation, on ajoute ensuite un poly-électrolyte cationique entraînant une floculation et enfin on met en oeuvre une séparation mécanique des phases liquides et solides, caractérisé en ce que le poly-électrolyte cationique est un polymère hydrosoluble comprenant au moins 40% de motifs récurrents portant chacun au moins un groupement ammonium quaternaire.

2. Procédé selon la revendication 1 dans lequel le motif récurrent portant au moins un groupement ammonium quaternaire est un motif dérivant d'un acrylate, et de formule :

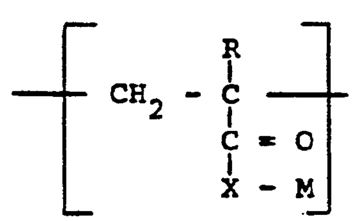

dans lequel :

X est O ou NH
R est H ou $CH_3$
M est un radical ammonium quaternaire de formule :

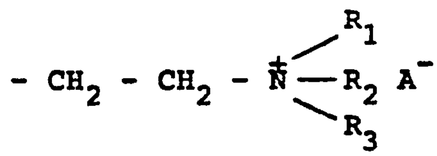

où $A^-$ est un anion compatible avec $\overset{+}{N}$ et où $R_1$, $R_2$, $R_3$ sont des restes hydrocarbonés en $C_1$ à $C_4$.

3. Procédé selon la revendication 2 dans lequel, outre les motifs récurrents portant au moins un groupement ammonium quaternaire, le polymère hydrosoluble comprend, en complément, des motifs acrylamides :

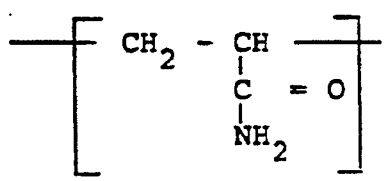

4. Procédé selon la revendication 2 dans lequel l'anion $A^-$ est choisi parmi les suivants : $Cl^-$, $Br^-$, $CH_3SO_4^-$.

5. Procédé selon la revendication 2 dans lequel les restes hydrocarbonés dénommés $R_1$ $R_2$ $R_3$ sont des alkyles en $C_1$ à $C_4$.

6. Procédé selon la revendication 2 dans lequel le radical M est un reste d'ammonium quaternaire de formule :

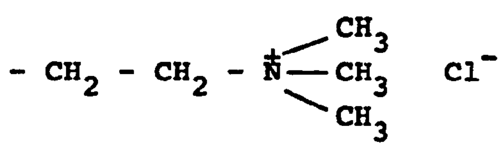

7. Procédé selon la revendication 1 dans lequel, après avoir injecté l'acide sulfurique et provoqué le meilleur mélange de cet acide sulfurique avec l'effluent, on contrôle le pH moyen dudit effluent et on additionne ce qui est nécessaire pour maintenir ce pH entre 5 et 6.

8. Procédé selon la revendication 1 dans lequel après avoir injecté un poly-électrolyte cationique, on provoque le meilleur mélange et on maintient le contact entre ledit poly-électrolyte et l'effluent jusqu'à ce que la floculation soit effective avant d'effectuer la séparation mécanique.

## Ansprüche

1. Verfahren zur Behandlung von Abwässern mit erhöhtem Gehalt an Mineralstoffen und einem Gehalt an Ligninsulfonaten, wie z.B. zur Behandlung von Bohrschlämmen, bei dem man zur Auslösung der Koagulation Schwefelsäure einspritzt, dann einen die Ausflockung auslösenden kationischen Polyelektrolyten zusetzt und schließlich die Flüssigphasen von den Festphasen mechanisch abtrennt, dadurch gekennzeichnet, daß der kationische Polyelektrolyt ein wenigstens 40 % wiederkehrende Einheiten mit jeweils mindestens einer quaternären Ammoniumgruppe umfassendes wasserlösliches Polymer ist.

2. Verfahren nach Anspruch 1, bei dem die wiederkehrende Einheit mit wenigstens einer quaternären Ammoniumgruppe eine von einem Acrylat abgeleitete Gruppe der Formel

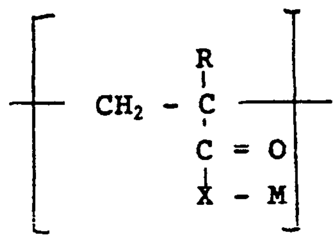

ist, worin
X O oder NH,
R H oder $CH_3$ und
M ein quaternärer Ammoniumrest der Formel

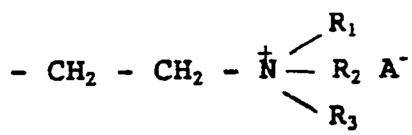

ist, worin $A^-$ ein mit $\overset{+}{N}$ verträgliches Anion und $R_1$, $R_2$ und $R_3$ $C_1$-$C_4$-Kohlenwasserstoffreste sind.

3. Verfahren nach Anspruch 2, bei dem das wasserlösliche Polymer neben den wiederkehrenden, wenigstens eine quaternäre Ammoniumgruppe aufweisenden Einheiten zusätzlich noch Acrylamidgruppen der Formel

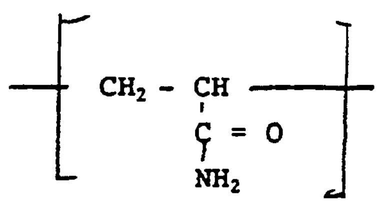

aufweist.

4. Verfahren nach Anspruch 2, bei dem das Anion $A^-$ ausgewählt ist unter den Anionen $Cl^-$, $Br^-$, $CH_3SO_4^-$.

5. Verfahren nach Anspruch 2, bei dem die als $R_1$, $R_2$ und $R_3$ bezeichneten Kohlenwasserstoffreste $C_1$-$C_4$-Alkyle sind.

6. Verfahren nach Anspruch 2, bei dem der Rest M ein quaternärer Ammoniumrest der Formel

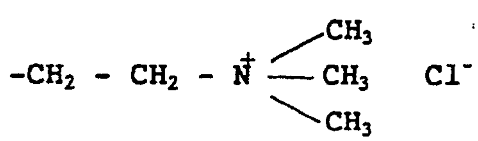

ist.

7. Verfahren nach Anspruch 1, bei dem man nach Einspritzen der Schwefelsäure und Einstellen der besten Mischung der Schwefelsäure mit dem Abwasser den Durchschnitts-pH des Abwassers kontrolliert und Schwefelsäure zusetzt, um den pH zwischen 5 und 6 aufrechtzuerhalten.

8. Verfahren nach Anspruch 1, bei dem man nach Einspritzen eines kationischen Polyelektrolyten die beste Mischung einstellt und den Kontakt zwischen dem Polyelektroly ten und dem Abwasser bis zur Ausflockung aufrechterhält und dann die mechanische Trennung durchführt.

**Claims**

1. Process for the treatment of aqueous effluents with a high content of inorganic matter and containing lignosulphonates, such as drilling muds, in which sulphuric acid is injected to produce a coagulation, a cationic polyelectrolyte is then added, resulting in a flocculation and, finally, a mechanical separation of the liquid and solid phases is carried out, characterized in that the cationic polyelectrolyte is a water-soluble polymer containing at least 40% of repeat units, each carrying at least one quaternary ammonium group.

2. Process according to Claim 1, in which the repeat unit carrying at least one quaternary ammonium group is a unit derived from an acrylate, and of formula :

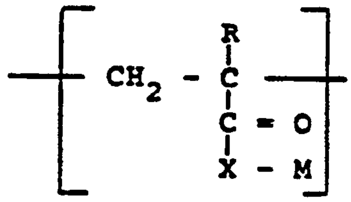

in which :
X is O or NH
R is H or $CH_3$
M is a quaternary ammonium radical of formula :

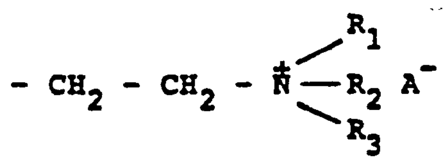

where $A^-$ is an anion compatible with $N^+$ and where $R_1$, $R_2$ and $R_3$ are $C_1$-$C_4$ hydrocarbon residues.

3. Process according to Claim 2, in which, besides the repeat units carrying at least one quaternary ammonium group, the water-soluble polymer additionally contains acrylamide units :

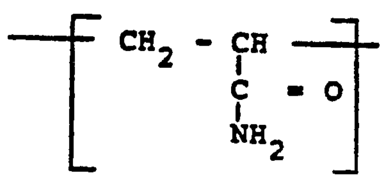

4. Process according to Claim 2, in which the anion $A^-$ is chosen from the following : $Cl^-$, $Br^-$, $CH_3SO_4^-$.

5. Process according to Claim 2, in which the hydrocarbon residues called $R_1$, $R_2$ and $R_3$ are $C_1$-$C_4$ alkyls.

6. Process according to Claim 2, in which the radical M is a quaternary ammonium residue of formula:

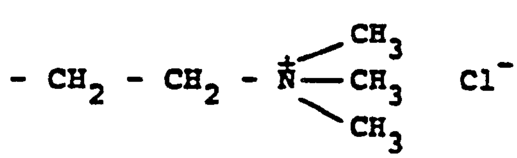

7. Process according to Claim 1, in which, after sulphuric acid has been injected and the best mixing of this sulphuric acid with the effluent has been produced, the average pH of the said effluent is controlled and what is needed is added to maintain this pH between 5 and 6.

8. Process according to Claim 1, in which, after a cationic polyelectrolyte has been injected, the best mixing is produced and the contact between the said polyelectrolyte and the effluent is maintained until the flocculation is effective before the mechanical separation is carried out.

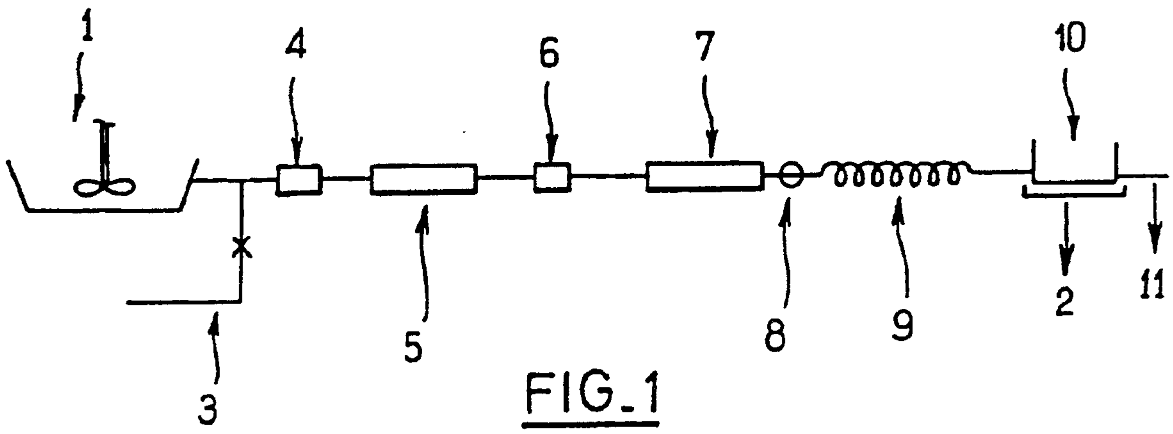


FIG_1

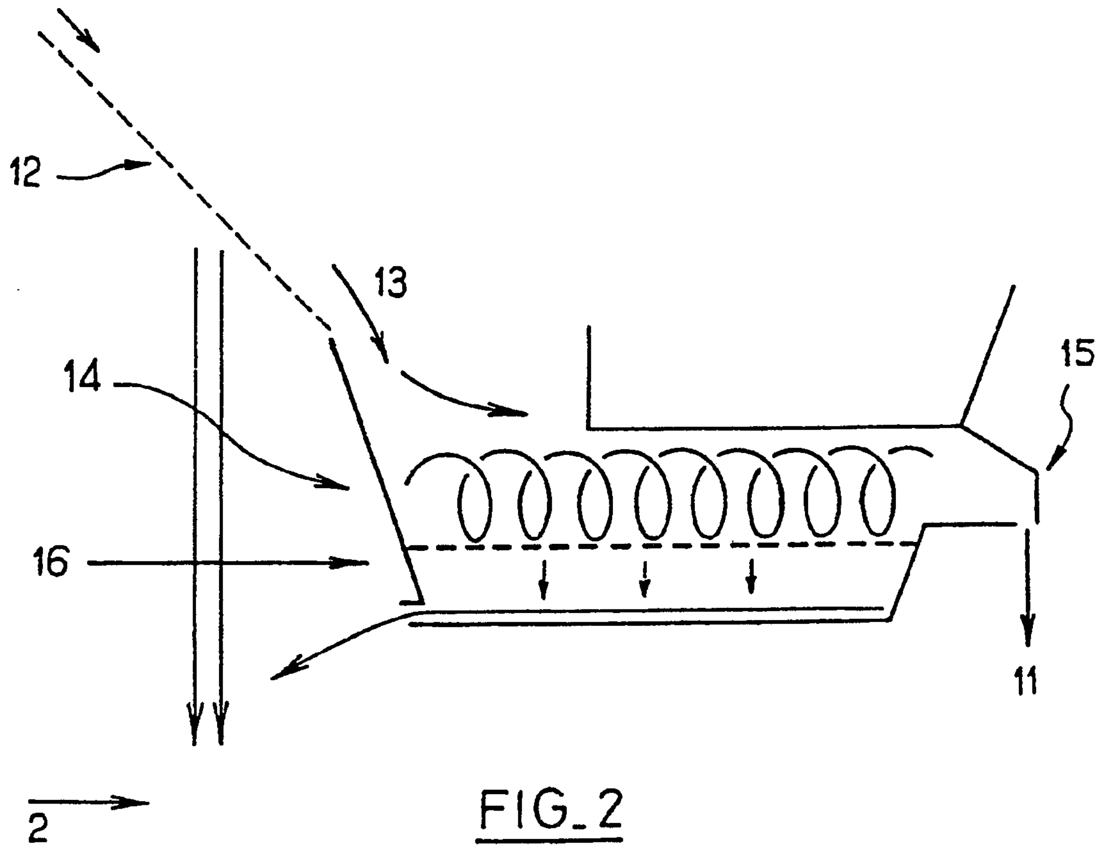


FIG_2